# EUROPEAN PATENT APPLICATION

(11) **EP 4 387 108 A1**
(43) Date of publication of application: **19.06.2024**
(21) Application number: 22213900.8
(22) Date of filing: 15.12.2022
(51) Int. Cl.: H04B 1/3827, H04B 1/525, H04R 25/00

(54) **AUDIO TRANSMISSION DEVICE**

(71) Applicant: Sonova AG, 8712 Stäfa (CH)
(72) Inventor: Oesch, Yves, 8712 Stäfa (CH); Ferrari, Federico, 8712 Stäfa (CH); Geiser, Pascal, 8712 Stäfa (CH); Weber, Stefan, 8712 Stäfa (CH); El-Hoiydi, Amre, 8712 Stäfa (CH)
(74) Representative: Schwan Schorer & Partner mbB

(57) **Abstract**

There is provided an audio transmission device for wirelessly transmitting an audio signal (17), comprising a first transceiver unit (20) for generating a first RF signal (19, 41) from the audio signal according to a first wireless protocol in a frequency band; and a second transceiver unit (22) for generating a second RF signal (21, 43) from the audio signal according to a second wireless protocol in said frequency band; wherein each transceiver unit (20, 22) is connected to an antenna (30, 30A1, 330B) for wirelessly transmitting the first and second RF signal, respectively, to an audio receiver device (200, 300).

## Description

The invention relates to an audio transmission device, such as a wireless microphone, for wirelessly transmitting an audio signal to an audio receiver device, such as a hearing aid.

A typical use case for such wireless audio transmission devices is a classroom, in which a teacher uses a wireless microphone which captures the teacher's voice and streams a corresponding audio signal to hearing devices worn by hearing impaired pupils. It may happen that not all pupils use the same type of wireless audio signal receiver device (which may be integrated within the hearing device or connected to the hearing device), i.e., the receiver devices may use different wireless protocols, which may even operate within the same frequency band, such as the 2.4 GHz ISM band.

EP 3 343 782 A1 relates to a wireless communication device comprising a microphone arrangement and a first processing unit for wirelessly communicating with a hearing device via a first communication protocol and a second processing unit for wirelessly communicating with a mobile phone via a second communication protocol, such as Bluetooth Low Energy (Bluetooth LE), wherein both protocols operate in the same frequency band at 2.4 GHz. Each processing unit is connected to a wireless communication unit connected to a RF antenna. The wireless communication unit comprises an RF switch for switching between transmitting and receiving of packets transmitted by either the first or the second processing unit or an external device. The first and second processing unit communicate via an event signal so as to align communication windows.

EP 3 826 329 A1 relates to a wireless communication device to be used with hearing aids, comprising a T-coil for receiving base band modulated signals and an RF antenna for use with protocols like Bluetooth LE.

US 2019/0104371 A1 relates to a wireless table microphone unit for transmitting captured audio signals to a hearing system device via a wireless link using a proprietary protocol.

US 2020/0260199 A1 relates to an audio provisioning device comprising a microphone arrangement and circuitry for wirelessly communicating with a plurality of hearing device via a plurality of antennas and wireless protocols, such as Bluetooth LE.

It is an object of the invention to provide for an audio transmission device which can be used with receiver devices utilizing different wireless protocols operating in the same frequency band. It is a further object to provide for a corresponding audio signal transmission method.

According to the invention these objects are achieved by an audio transmission device as defined in claim 1 and an audio signal transmitting method as defined in claim 15.

The invention is beneficial in that a relatively simple and efficient audio transmission device is provided which can be used in with audio receiver devices utilizing different wireless protocols operating in the same frequency band and which allows, by providing for each protocol a dedicated transceiver unit, concurrent transmission by one of the protocols and reception of the by the other one of the protocols.

According to one example, the first transceiver unit and the second transceiver unit are connected to a single common antenna via a radio frequency (RF) combiner configured to combine the first RF signal and the second RF signal into a combined RF signal supplied to the common antenna for transmitting the combined RF signal. The RF combiner may be, for example, a Wilkinson combiner.

According to one example, the audio transmission device may comprise a first RF front-end unit connected to the first transceiver unit and configured to amplify the first RF signal prior to transmission and/or a second RF front-end unit connected to the second transceiver unit and configured to amplify the second RF signal prior to transmission. Each of the first and second RF front-end units may be a dedicated external front-end chip.

According to one example, one or both of the first and second RF front-end units may be configured to provide for an equivalent isotropically radiated power (EIRP) of not more than 10 dBm.

According to one example, each of the first and second RF front-end units may include a power amplifier for the respective first and second RF signal, a bypass of the power amplifier for low power usage, and/or a low noise amplifier for an RF signal received by the antenna.

According to one example, the RF combiner is configured to also act as an RF divider so as to supply an RF signal received by the single common antenna to at least one of the first RF front-end unit and the second RF front-end unit.

According to one example, the audio signal to be transmitted by the audio transmission device is a mixture signal of an input audio signal captured by a microphone arrangement forming part of or being connected to the audio transmission device and an external audio signal received from an external audio device via the RF combiner.

According to one example, the first transceiver unit is configured to demodulate an external RF signal received from the external audio device via the RF combiner so as to obtain the external audio signal, wherein the audio transmission device comprises an audio signal processing unit for mixing the input audio signal captured by the microphone arrangement and the external audio signal and to supply the mixture signal as the audio signal to be transmitted by the audio transmission device to the first transceiver unit and the second transceiver unit.

According to one example, an RF attenuator (70) is provided between the output of at least one of the RF front-end units (24, 26) and the input of the RF combiner so as to augment the isolation of the RF front-end units from each other, thereby reducing intermodulation products.

According to one example, the first transceiver unit and the second transceiver unit are configured to periodically re-synchronize the first and the second wireless protocol in a such manner that at least part of the RF signal receiving periods of the first wireless protocol are aligned with periods in which there is no RF signal transmission of the second wireless protocol. The second transceiver unit may be configured to supply a logic output signal indicative of the present RF signal transmission activity of the second transceiver unit to the first transceiver unit (24) so as to allow for aligning at least part of the RF signal receiving periods of the first wireless protocol with periods in which there is no RF signal transmission of the second wireless protocol.

According to one example, the first transceiver unit and the second transceiver unit are configured to not synchronize with each other, so that the first and the second wireless protocol run independently of each other.

According to one example, the second wireless protocol is a standard protocol which is adjusted within its specification in such a manner that a time distance between repeated transmissions of the same audio packet is set so as to minimize coincidence of such transmissions with signal receiving periods of the first wireless protocol.

According to one example, the first transceiver unit is connected to the second RF front-end unit in manner so as to selectively prevent RF signal transmission activities of the second RF front-end unit.

The first transceiver unit may be configured to prevent signal transmission activities of the second RF front-end unit at least during part of the RF signal receiving periods of the first wireless protocol; in particular, the first transceiver unit may be configured to prevent RF signal transmission activities of the second RF front-end unit only during RF signal receiving periods of the first wireless protocol exceeding a given priority level. For example, the first transceiver unit may be configured to prevent signal transmission activities of the second RF front-end unit only during RF signal receiving periods of the first wireless protocol in which audio signals and/or time-critical control signals are to be expected to be received.

According to one example, the first transceiver unit is configured to generate a logic control signal for the second RF front-end unit based on a combination of signals output by low level hardware and high level software of the first transceiver unit, respectively, so as to allow for precise timing and for taking into account the priority level of the RF signal receiving periods of the first transceiver unit. For example, the logic control signal may be generated by using at least one of logic gates, transistors, resistors and combinations thereof.

According to one example, the frequency band of the first and second wireless protocol is the 2.4GHz ISM band. The first and second wireless protocol may use a frequency hopping scheme. The first wireless protocol may be a proprietary protocol, and the second wireless protocol may be Bluetooth LE Audio.

According to one example, the audio transmission device is (i) a portable device to be worn by a speaker or to be held in the hand of a speaker, (ii) a table microphone arrangement, or (iii) an audio streaming device connected to an external audio source like a TV set.

According to one example, the audio transmission device comprises or is connected to a microphone arrangement for capturing an input audio signal which forms at least part of the audio signal to be transmitted by the audio transmission device.

According to one example, the audio transmission device comprises an audio signal processing unit for processing the input audio signal prior to being transmitted.

Preferred embodiments of the invention are defined in the dependent claims.

Hereinafter, examples of the invention will be illustrated by reference to the attached drawings, wherein:
Figure 1 is a schematic illustration of a wireless audio system;
Figure 2 is a schematic illustration of a first example of an audio transmission device;
Figure 3 is a schematic illustration of a second example of an audio transmission device;
Figure 4 is a schematic illustration of a third example of an audio transmission device;
Figure 5 shows an example of a detail of the audio transmission device of Figure 4; and
Figure 6 shows an example of a front-end unit.

A "hearing device" as used hereinafter is any ear level device suitable for reproducing sound by stimulating a user's hearing, such as an electroacoustic hearing aid, a bone conduction hearing aid, an active hearing protection device, a hearing prostheses device such as a cochlear implant, a wireless headset, an earbud, an earplug, an earphone, etc.

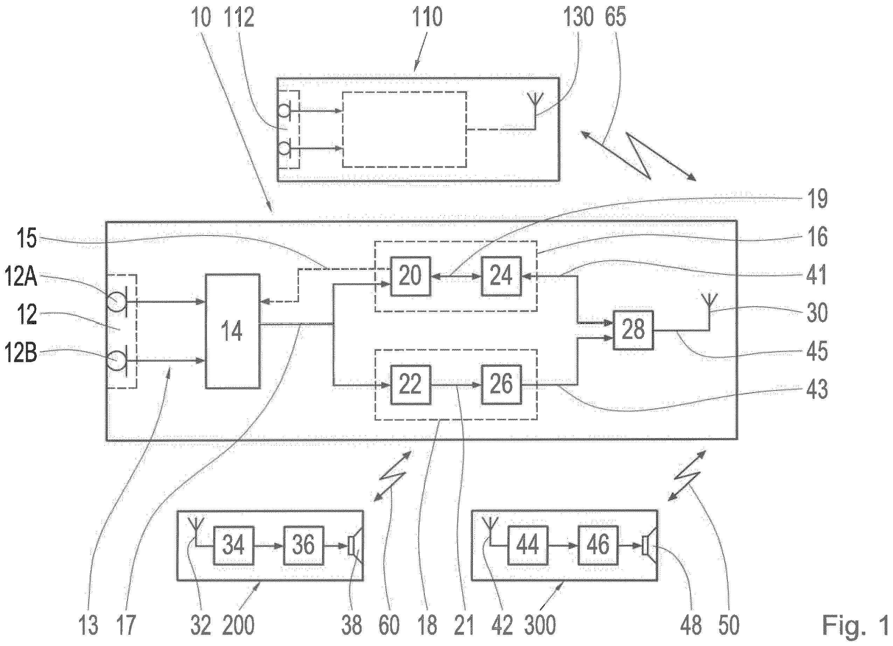

Figure 1 is a schematic illustration of an example of a wireless audio system comprising a (first) audio transmission device 10, a first audio receiver device 200 and a second audio receiver device 300, which may exchange data via wireless links 50 and 60, respectively.

The audio transmission device 10 comprises a microphone arrangement 12 which may include a plurality of microphones 12A, 12B for capturing audio signals 13from ambient sound, such as from the voice of a speaker, in particular a teacher in a classroom, utilizing the audio transmission device 10. The audio signals 13 captured by the microphone arrangement 12 are supplied as input to an audio signal processing unit 14.

The microphone arrangement 12 may be integrated within the audio transmission device 10 or it may be connected to the audio transmission device 10. According to one example, the microphone arrangement 12 may be a lapel microphone to be worn at the user's clothing. The audio transmission device 10 may be designed to be worn around the user's neck or at a belt of the user, or it may be designed as a handheld device. It could also be a table microphone. According to another example, the audio transmission device may be a streaming device connected to an external source such as a TV streamer.

The audio signal processing unit 14 may include a beamformer, noise reduction treatment, a gain model, etc. The processed output audio signal 17 may be supplied, in parallel, to a first RF block 16 and a second RF block 18, respectively. The first RF block includes a first transceiver unit 20 for generating a first RF signal 19 from the audio signal provided by the audio signal processing unit 14 according to a first wireless protocol in a certain frequency band, and the second RF block 18 comprises a second transceiver unit 22 for generating a second RF signal 21 from the audio signals supplied by the audio signal processing unit 14 according to a second wireless protocol in the same frequency band.

The first RF block 16 comprises a first RF front-end unit 24 connected to the first transceiver unit 20 for amplifying the first RF signal to a transmission level, and the second RF block 18 comprises a second RF front-end unit 26 connected to the second transceiver unit 22 for amplifying the second RF signal to a transmission level. The amplified first RF signal 41 and the amplified second RF signal 43 are supplied to a RF combiner 28 which combines the first and second amplified RF signals into a combined RF signal 45 which is supplied to an antenna 30 for transmitting the combined RF signal via the wireless link 50 or 60, respectively, to the first audio receiver device 200 or the second audio receiver device 300, respectively.

The first audio receiver device 200 includes an RF antenna 32 for receiving audio signals from the audio transmission device 10 via the wireless link 60, a transceiver unit 34 for transforming the received RF signals into data, a processing unit 36 for processing the received data, and an audio output transducer 38, such as a loudspeaker, for reproducing audio signals included in the received data.

The second audio receiver device 300 includes an RF antenna 42 for receiving RF signals via the wireless link 50 from the transmission device 10, a transceiver unit 44 for reproducing data from the received RF signals, a data processing unit 46 for the received data and an audio output transducer 48.

The first and second audio receiver device 200, 300 may be hearing devices to be worn at ear level for stimulating the respective user's hearing via the audio output transceivers 38, 48, respectively. For example, the audio receiver devices 200, 300 may be hearing aids, earphones or wireless headsets.

The transceiver unit 34 of the first audio receiver device 200 may be configured to use the first wireless protocol, and the transceiver unit 44 of the second audio receiver device 300 may be configured to utilize the second wireless protocol.

The wireless system of Figure 1 also may optionally include a second audio transmission device 110 which may be similar or identical to the first audio transmission device 10 and which may transmit its audio signal captured by its microphone arrangement 112 via the wireless link 65 (which uses the first wireless protocol) to the first audio transmission device 10 which may receive this audio signal as an external audio signal via its antenna 30 and its RF combiner 28. In this case the RF combiner 28 is configured to also act as a RF divider, so as to supply the RF signal received by the antenna 30 to the first RF front-end unit 24 of the first RF block 16. The first transceiver unit 20 (which uses the first wireless protocol) then demodulates the received RF signal so as to obtain the external audio signal 15 captured by the second audio transmission device 110. The external audio signal 15 may be supplied to the audio signal processing unit 14 (see dashed signal line in Fig. 1) where it is mixed with the audio signals 13 captured by microphone arrangement 12 so as to generate a mixture signal which then is supplied as the output 17 of audio signal processing unit 14 both to the first transceiver 20 and the second transceiver unit 22.

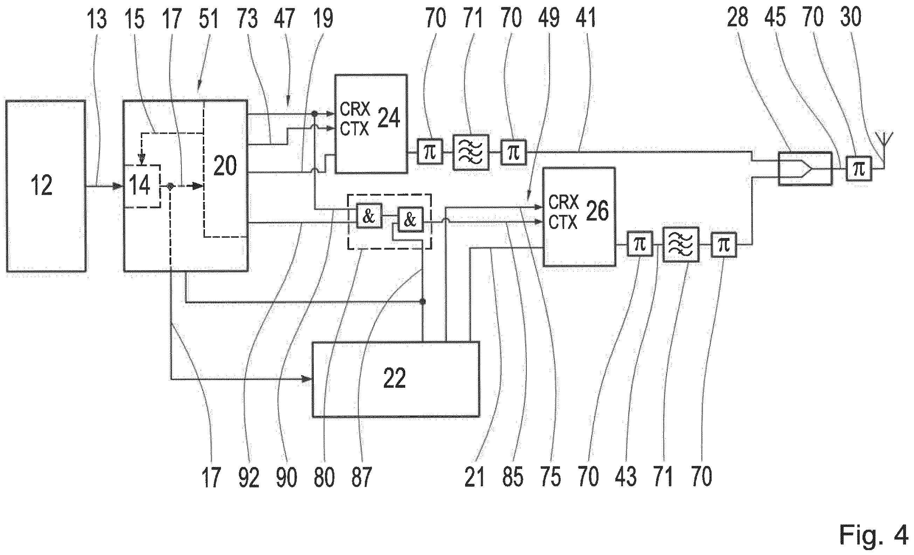

It is noted that, while the audio signal processing unit 14 is shown in Fig. 1 as a unit separate from the transceiver units 20, 22, it could be integrated, for example, in a common hardware unit (chip) with the first transceiver unit 20 (as shown, for example, in Fig. 4).

According to one example, the RF combiner/divider 28 may be a Wilkinson combiner.

According to one example, the first and second wireless protocol use a frequency hopping scheme, wherein pseudo random sequences are used. The audio signal transmitted via the first and second protocol can be encoded with the same type of CODEC in both protocols, or it can be encoded with different types in each protocol. The bitrate of the audio signals transmitted via the first and second protocol can be identical or different.

According to one example, the first wireless protocol may be a proprietary protocol and the second wireless protocol may be Bluetooth Low Energy Audio (Bluetooth LE Audio), with the frequency band of the first and second wireless protocol being the 2.4 GHz ISM band.

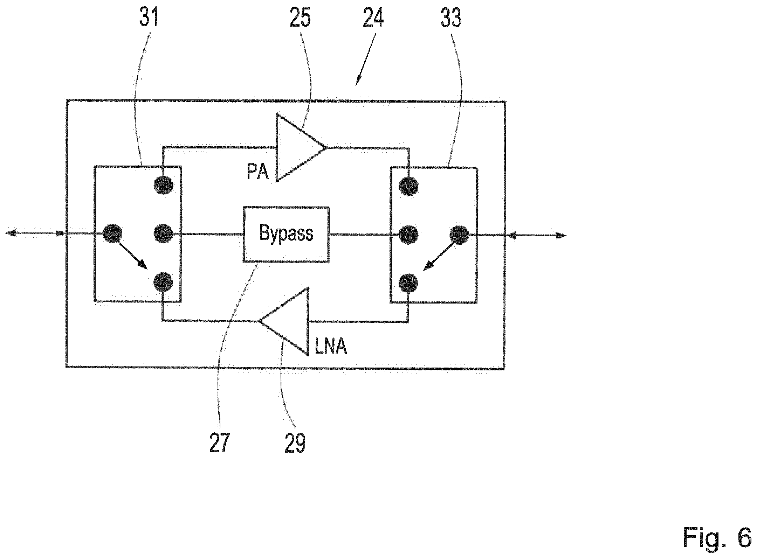

According to one example, each of the first and second RF front-end units 24, 26 may be a dedicated external front-end chip. A schematic example of the first front-end unit 24 (the second front end unit 26 may have an analogous design) is shown in Fig. 6, according to which the first RF front-end unit 24may include a power amplifier (PA) 25 for the respective RF signal provided by the first transceiver unit 20, so as to generate an amplified RF signal which is supplied, via the combiner 28, to the antenna 30 for transmission. Further, the first RF front-end unit 24 may include a bypass 27 of the power amplifier 25 for low power usage, i.e., for use cases or operation modes in which a relatively short transmission range is sufficient or is desired, such as for short distance proximity pairing. The first RF front-end unit 24 also may include a low noise amplifier (LNA) 29 for an RF signal received by the antenna 30 and supplied to the first RF front-end unit 24 via the combiner 28.

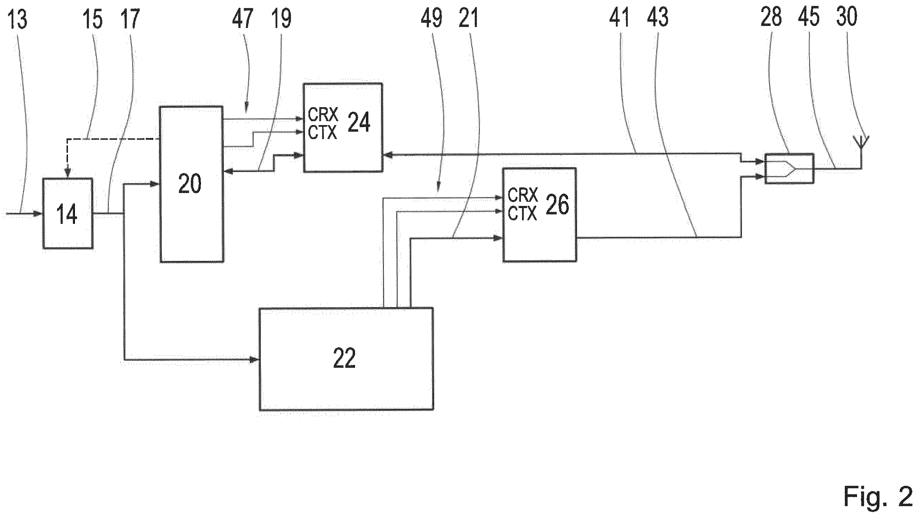

The RF front-end unit 24 further comprises switching units 31 and 33 for connecting the input/output signal lines to the desired functional element (i.e., PA, Bypass or LNA), which are controlled by the first transceiver unit via respective control lines (not shown in Fig. 6); these control lines (see lines 47, 49, 73, 75, 85, 90 in Figs. 2-5) in addition enable and disable the PA or the LNA so that they are powered when in use and disconnected to save power when not in use.

While in all illustrated examples the audio transmission device is shown to include a dedicated front-end unit for each transceiver unit, in some cases, the audio transmission device could work without external front-ends, depending on the expected range, power of the "naked" transceiver, antenna size, frequency of operation, etc. For example, no PA may be necessary when using RF transceiver units having a natively high power level. In some implementations, a single front-end unit may be provided, i.e., only for one of the transceiver units.

According to one example, the transmission power ("equivalent isotropically radiated power" (EIRP)) at the antenna 30 should not exceed 10 dBm, so that in this case each of the first and second RF front-end units 24, 26 (or the transceiver units 20, 22 if no RF front-end units are used) would be configured to provide for an EIRP of not more than 10 dBm.

Figure 2 shows a more detailed illustration of the example of the transmission device 10 of Figure 1, wherein in addition to the audio and RF signal lines also control lines 47, 49 for controlling transmission ("CTX") and reception ("CRX") actions of the front-end units 24, 26 by the respective transceiver 20, 22 are illustrated. The use of a single antenna 30 for both RF blocks 16, 18 allows for a particularly compact design of the transmission device.

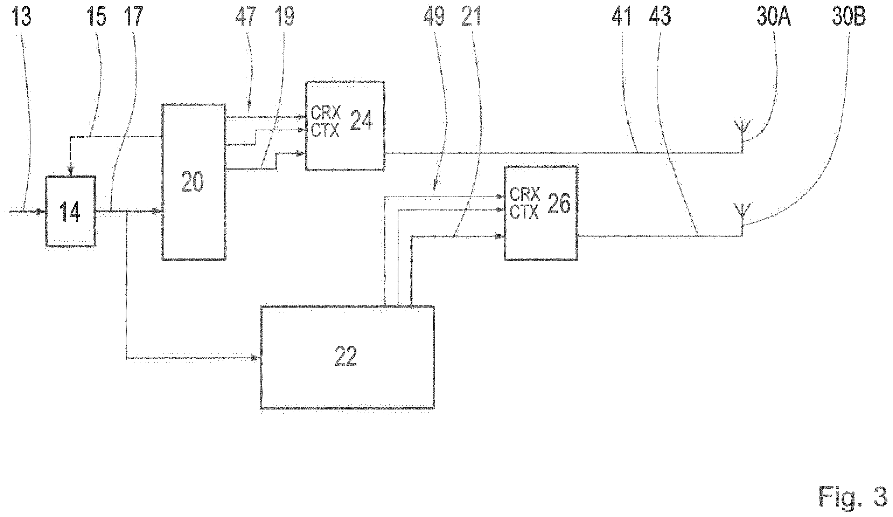

An alternative example is illustrated in Figure 3, wherein the amplified first RF signal 41 from the first RF front-end unit 24 is supplied to a dedicated first RF antenna 30A, and the amplified second RF signal 43 from the second RF front-end unit 26 is supplied to a dedicated second RF antenna 30B. In this case, each RF block 16, 18 is provided with its own dedicated antenna 30A, 30B, so that no RF combiner is necessary.

According to one example, the first and second transceiver units 20, 22 are not synchronized, so that the first and second wireless protocols run independently of each other. While such implementation is particularly simple, it is suitable primarily for cases in which inter-protocol collisions (in the sense that one of the protocols transmits during times when the other protocol listens) are sufficiently rare, so that the packet error rate remains low enough to ensure proper transmission of the audio content over the two different protocols.

According to an alternative example, first and second transceiver units 20, 22 may be configured to periodically re-synchronize the first and second wireless protocol in such a manner that at least part of the RF signal receiving periods (listening periods) of the first wireless protocol are aligned with periods in which there is no RF signal transmission of the second wireless protocol, thereby preventing interference of the RF signal transmission by the second wireless protocol with the listening periods of the first wireless protocol. According to one example, the second transceiver unit 22 may be configured to supply a logic output signal indicative of the present RF signal transmission activity of the second transceiver unit 22 to the first transceiver unit 20, so as to allow for aligning at least a part of the RF signal receiving periods of this first wireless protocol with periods in which there is no RF signal transmission of the second wireless protocol.

According to one example, when the second wireless protocol is a standard protocol, it may be adjusted within its specification in such a manner that a time distance between repeated transmissions of the same audio packet is set in a manner so as to minimize coincidence of such transmissions with RF signal receiving periods of the first wireless protocol. For example, when the second wireless protocol is Bluetooth LE Audio, the sub-interval of the broadcast isochronous group represents the distance between repeated transmissions of the same audio packet; this sub-interval can be increased compared to the minimum value defined by the Bluetooth core specification and set to a value that minimizes collisions with the proprietary first wireless protocol. The resulting increase in Bluetooth LE Audio latency is acceptable. This example applies both to free running protocols and to re-synchronizing protocols.

Figure 4 illustrates a modification of the examples of Figures 1 and 2. In this example, an RF attenuator 70 is provided between the output of at least one of the RF front-end units 24, 26 and the input of the RF combiner 28, so as to augment the isolation of the RF front-end units 24, 26 from each other, thereby reducing intermodulation products. The reason is that the RF signal fed from each power amplifier 25 of the RF front-end unit 24 / 26 not only goes to the antenna 30, but a part of it (which may be up to 50%) is also fed back to the power amplifier 25 of the other RF front-end unit 26 / 24, respectively, with both signals being mixed due to the non-linearity of the power amplifiers 25. For example, if the RF combiner isolation is 30 dB, then a typical RF signal of the first RF block 16 of 20 dBm would be still visible at the output of the power amplifier 25 of the second protocol (which may be Bluetooth LE Audio) with a level of +20 dBm - 30 dB = -10 dBm, would be sufficient to generate side-products of the Bluetooth LE Audio signals, which side-products might have a level too high to pass certification.

Such problem can be solved by inserting attenuators 70 in one or both of the RF lines, which comes at the cost of increased power consumption if the RF output level at the antenna is to be maintained for both protocols. Also, the sensitivity in reception might be degraded by the added attenuation, so that some margin should be present. Such attenuator 70 could be implemented in a very simple manner, for example by three resistors in a pi- or T-network. A band-pass filter (BPF) 71 may be provided in between two of the attenuators 70 arranged in series.

Further, in the example of Figure 4, the first transceiver unit 20 is connected to the second RF front-end unit 26 in a manner so as to selectively prevent RF signal transmission activities of the second RF front-end unit 26. In particular, the first transceiver unit 20 may be configured to prevent RF signal transmission activities of the second RF front-end unit 26 at least during part of the RF signal receiving (listening) periods of the first wireless protocol.

In the example of Figure 4, a logic unit 80 is provided which receives both input 90, 92 from the first transceiver unit 20 and input 87 from the second transceiver unit 22, respectively, and which provides its output 85 to the second RF front-end unit 26 for allowing the first transceiver unit 20 to control the second RF front-end unit 26 in a manner so as to prevent RF signal transmission activities of the second RF front-end unit 26 at least during part of the RF signal receiving periods of the first wireless protocol.

In particular, the first transceiver unit 20 may be configured to prevent RF signal transmission activities of the second RF front-end unit 26 only during RF signal receiving periods of the first wireless protocol exceeding a given priority level, so that only the critical RF signal receiving periods of the first wireless protocol are specifically protected.

According to one example, the first transceiver unit 20 may be configured to prevent RF signal transmission activities of the second RF front-end unit 26 only during RF signal receiving periods of the first wireless protocol in which audio signals and/or time-critical control signals are expected to be received.

According to one example, the first transceiver unit 20 may be configured to generate a logic control signal for the second RF front-end unit 26 based on a combination of signals coming from low-level hardware and high-level software of the first transceiver unit 20, so as to allow for a precise timing and for taking into account the priority level of the RF signal receiving periods of the first wireless protocol. In particular, the logic control signal may be generated by using at least one of logic gates, transistors, resistors and combinations thereof.

In the example of Figure 4, the signal 90 supplied to the logic unit 80 is a signal generated directly by the hardware of the first transceiver unit 20, which signal is tightly synchronized to the first wireless protocol (which is a proprietary protocol in the example), with a resolution of 1 µs. While the hardware is not aware of the expected incoming packet content, i.e., whether it will be a high or low priority packet, such information is provided by the signal 92 which is directly driven by the high-level software of the first transceiver unit 20 and which is supplied to the logic unit 80. Unlike the hardware signal 90, the high-level software signal 92 cannot be currently controlled in time with a sufficient precision but reflects whether the respective packet to be received by the first transceiver unit 20 is of high or low priority; in the example, Figure 4 only high priority packets need to be protected against a possible collision with a packet transmitted by the second transceiver unit 22 (which uses Bluetooth LE Audio its wireless protocol.

In the example of Figure 4 the logic unit 80 comprises a NAND gate combining the two signals 90 and 92, so that it is ensured that the decision to discard/prevent the transmission of a certain packet by the second transceiver unit 22 (i.e., the second wireless protocol) is based both on a high-level decision regarding the incoming packet to be protected (i.e., the incoming packet to be received by the first transceiver unit 20 (i.e., the first wireless protocol)) and on a precise timing (due to the hardware signal 90), thereby ensuring that the blocking time is reduced to the required minimum.

In the example of Figure 4 the first transceiver unit 20 controls the transmission activity of the first front-end unit 24 by a control signal 73, while the receiver activity of the first front-end unit 24 is controlled by the signal 90. The second transceiver unit 22 controls the receiving activity of the second front-end unit 26 by a control signal 75, while the transmission activity of the second front-end unit 26 is controlled by the output signal 85 of the logic unit 80.

A further modification of the example of Fig. 4 compared to the examples of Figs.1 and 2 is that the audio signal processing unit 14 and the first transceiver unit 20 are shown as being integrated within a common hardware unit (chip) 51, like in the example of Fig. 3.

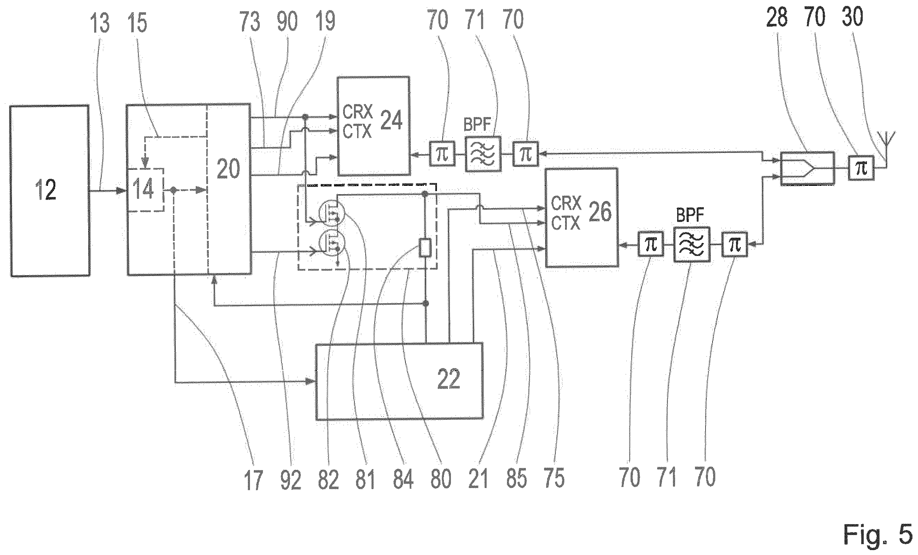

In Figure 5 an example of the logic unit 80 is shown in more detail, using a combination of two NMOS (n-type metal-oxide-semiconductor field-effect) transistors 81, 82 and a pull-up resistor 84. However, other circuit topologies could be used to provide the same functionality.

Such selective packet transmission control of the second RF front-end unit 26 by the first transceiver unit 20 may be applied, for example, in a so-called "mixing use case" already mentioned above with regard to Fig.1, wherein the first RF front-end unit 24 and the first transceiver unit 20 are configured to receive an external audio signal from an external audio transmission device, such as a secondary transmission device 110, as shown in Figure 1, with the audio transmission device 10 acting as a primary transmission device. The primary transmission device 10 in this case is configured to mix the external audio signal 15 received via the link 65 from the secondary transmission device 110 with its own audio signals 13 captured by the microphone arrangement 12 and to supply the resulting mixed audio signal 17 to the first transceiver unit 20 and the second transceiver unit 22 for wirelessly transmitting the mixed audio signal via the first RF front-end unit 24 and the second RF front-end unit 26, respectively, via the wireless links 60 and 50 to the first audio receiver device 200 and the second audio receiver device 300, respectively.

Such setup with two audio transmission devices 10, 110 is typical when two teachers are working in the same classroom, one of them wearing the primary transmission device 10 and the other one wearing the secondary transmission device 110.

To ensure proper reception of audio signals from the secondary transmission device 110 the first transceiver unit 20 may control the second RF front-end unit 26 in such a manner that transmission of packets from the second transceiver unit 22 is suppressed whenever the first transceiver unit 20 expects audio signal reception from the secondary transmission device 110 via the proprietary link 60.

According to one example, the transmission of packets from the second transceiver unit 22 may be suppressed also when high priority non-audio packets from the secondary transmission device 110 are expected, such as time-critical control signals, while allowing transmission of packets from the second transceiver unit 22 when low priority packets from the secondary transmission unit 110 are expected, such as non-time-critical control signals. Alternatively, even in the latter case transmission of packets from the second transceiver unit 22 may be suppressed.

## Claims

1. An audio transmission device for wirelessly transmitting an audio signal (17), comprising
a first transceiver unit (20) for generating a first RF signal (19, 41) from the audio signal according to a first wireless protocol in a frequency band; and
a second transceiver unit (22) for generating a second RF signal (21, 43) from the audio signal according to a second wireless protocol in said frequency band;
wherein each transceiver unit (20, 22) is connected to an antenna (30, 30A1, 330B) for wirelessly transmitting the first and second RF signal, respectively, to an audio receiver device (200, 300).

2. The transmission device of claim 1, wherein the first transceiver unit (20) and the second transceiver unit (22) are connected to a single common antenna (30) via an RF combiner (28) configured to combine the first RF signal (19, 41) and the second RF signal (21, 43) into a combined RF signal (45) supplied to the common antenna for transmitting the combined RF signal.

3. The transmission device of claim 2, further comprising a first RF front-end unit (24) connected to the first transceiver unit (20) and configured to amplify the first RF signal (19) prior to transmission and/or a second RF front-end unit (26) connected to the second transceiver unit (22) and configured to amplify the second RF (21) signal prior to transmission.

4. The transmission device of claim 3, wherein each of the first and second RF front-end units (24, 26) includes a power amplifier (25) for the respective first (19) and second RF signal (21)

5. The transmission device of claim 4, wherein each of the first and second RF front-end units (24, 26) includes a bypass (27) of the power amplifier (25) for low power usage.

6. The transmission device of one of claims 3 to 5, wherein each of the first and second RF front-end units (24, 26) includes a low noise amplifier (29) for an RF signal received by the antenna (30).

7. The transmission device of one of claims 3 to 6, wherein the RF combiner (28) is configured to also act as an RF divider so as to supply an RF signal received by the single common antenna (30) to at least one of the first RF front-end unit (24) and the second RF front-end unit (26).

8. The transmission device of claim 7, wherein the audio signal to be transmitted by the audio transmission device (10) is a mixture signal (17) of an input audio signal (13) captured by a microphone arrangement (12) forming part of or being connected to the audio transmission device and an external audio signal (15) received from an external audio device (110) via the RF combiner (28).

9. The transmission device of claim 8, wherein the first transceiver unit (20) is configured to demodulate an external RF signal received from the external audio device (110) via the RF combiner (28) so as to obtain the external audio signal (15), and wherein the audio transmission device (10) comprises an audio signal processing unit (14) for mixing the input audio signal (13) captured by the microphone arrangement (12) and the external audio signal and to supply the mixture signal as the audio signal to be transmitted by the audio transmission device to the first transceiver unit and the second transceiver unit (22).

10. The transmission device of one of the preceding claims, wherein the first transceiver unit (20) and the second transceiver unit (22) are configured to periodically re-synchronize the first and the second wireless protocol in a such manner that at least part of the RF signal receiving periods of the first wireless protocol are aligned with periods in which there is no RF signal transmission of the second wireless protocol, and wherein the second transceiver unit (26) preferably is configured to supply a logic output signal (87) indicative of the present RF signal transmission activity of the second transceiver unit to the first transceiver unit (24) so as to allow for aligning at least part of the RF signal receiving periods of the first wireless protocol with periods in which there is no RF signal transmission of the second wireless protocol.

11. The transmission device of one of claims 3 to 10, wherein the first transceiver unit (20) is connected to the second RF front-end unit (26) in manner so as to selectively prevent RF signal transmission activities of the second RF front-end unit.

12. The transmission device of claim 11, wherein the first transceiver unit (20) is configured to prevent signal transmission activities of the second RF front-end unit (26) at least during part of the RF signal receiving periods of the first wireless protocol. in particular to prevent RF signal transmission activities of the second RF front-end unit (26) only during RF signal receiving periods of the first wireless protocol exceeding a given priority level.

13. The transmission device of one of the preceding claims, wherein the first wireless protocol is a proprietary protocol and wherein the second wireless protocol is Bluetooth LE Audio.

14. The transmission device of one of the preceding claims, wherein the audio transmission device (10) is (i) a portable device to be worn by a speaker or to be held in the hand of a speaker, (ii) a table microphone arrangement, or (iii) an audio streaming device connected to an external audio source like a TV set.

15. A method for transmitting an audio signal (17), comprising
generating, by a first transceiver unit (20) of an audio transmission device (10), a first RF signal (19) from the audio signal (17) according to a first wireless protocol in a frequency band;
generating, by a second transceiver unit (22) of the audio transmission device, a second RF signal (21) from the audio signal according to a second wireless protocol in said frequency band; and
transmitting, by an antenna (30, 31, 33), the first and second RF signal, respectively, to an audio receiver device (200, 300).
